Europäisches Patentamt

European Patent Office

Office européen des brevets

(19)

(11) Veröffentlichungsnummer: **0 399 095**
**A2**

(12) **EUROPÄISCHE PATENTANMELDUNG**

(21) Anmeldenummer: 89118575.3

(51) Int. Cl.5: **F16K 5/06**

(22) Anmeldetag: 06.10.89

(30) Priorität: 29.04.89 DE 3914327

(43) Veröffentlichungstag der Anmeldung:
**28.11.90 Patentblatt 90/48**

(84) Benannte Vertragsstaaten:
**DE ES FR GB IT**

(71) Anmelder: **M H A ZENTGRAF MERZIGER
HOCHDRUCK-ARMATUREN GMBH & CO.
Ballerner Strasse 8
D-6640 Merzig(DE)**

(72) Erfinder: **Hein, Alfred
Kirststrasse 9
D-6642 Mettlach(DE)**

(74) Vertreter: **Vièl, Georg, Dipl.-Ing.
Am Zimmerplatz 16
D-6606 Saarbrücken-Gersweiler(DE)**

(54) **Kugelhahn.**

(57) Die Erfindung betrifft einen Kugelhahn, der sich
vor allem dadurch auszeichnet, daß das Gehäuse als
Unterteil mit einem Deckel ausgebildet ist, daß in
dem Unterteil zwei parallel verlaufende, absperrbare
Durchgänge vorhanden sind, denen ein in dem Unterteil drehbar gelagertes Küken zugeordnet ist, und
daß mit dem zur Führung der Betätigungsorgane für
das Küken ausgebildeten Deckel das Unterteil mit
dem Küken dicht verschlossen sind.

Die mit der Erfindung erzielten Vorteile bestehen
insbesondere darin, daß eine flache Bauweise gegeben ist, durch praktisch gerade Durchgänge sich ein
geringer Durchflußwiderstand ergibt und der Kugelhahn gut (molchbar) zu reinigen ist. Letzteres ist für
die farben-und lackverarbeitende Industrie
(Automobilfabriken) von besonderer Bedeutung. Im
Gegensatz zu bekannten Kugelhähnen gibt es keine
Blindverschraubungen und es gilt an nur wenigen
Stellen Dichtungen vorzusehen. Der neue Kugelhahn
ist sowohl für den Einsatz in einem Leitungssystem
als auch - bei hydraulischen Aggregaten -für den
sogenannten Platten-Aufbau geeignet.

Fig. 2

## Kugelhahn

Die Erfindung betrifft einen Kugelhahn mit einem in einem Gehäuse geführten Küken.

Kugelhähne sind in den verschiedensten Versionen bekannt und werden für zahlreiche Zwecke eingesetzt, um Flüssigkeiten, insbesondere bei hohen Drücken, abzusperren. Bei der Verarbeitung von Farben und Lacken bestehen besondere Forderungen an Kugelhähne, die mit den derzeit eingesetzten Kugelhähnen nicht erfüllbar sind. So haben bekannte, bei der Lackverarbeitung eingesetzte Kugelhähne schlecht zugängliche Durchgänge und einen hohen Durchflußwiderstand. Diese Kugelhähne sind schlecht zu reinigen. Auch ist ihre Bauweise räumlich gesehen, aufwendig. Zudem sind die Kosten für die Wartung bzw. Instandhaltung wegen der verhältnismäßig großen Zahl von notwendigen Dichtungen hoch.

Der Erfindung liegt die Aufgabe zugrunde, einen Kugelhahn zu schaffen, der bei geringem Platzbedarf möglichst wenige Dichtstellen aufweist und auf einfache Weise zu reinigen ist.

Diese Aufgabe wird erfindungsgemäß dadurch gelöst, daß in dem Unterteil zwei gegenüberliegend verlaufende, absperrbare Durchgänge vorhanden sind, denen im Küken Bohrungen zugeordnet sind und daß der Deckel unter Vorspannung der Dichtungen zwischen Küken und den Durchgängen das Unterteil mit dem Küken dicht verschließt.

Nach einer weiteren Ausbildung der Erfindung ist vorgesehen, daß als Dichtungen zwischen dem Küken und den Durchgängen mit Tellerfedern belastete Dichtringe vorgesehen sind.

Erfindungsgemäß kann auch vorgesehen sein, daß die Durchgänge am Boden des Unterteils endend ausgebildet sind.

Die mit der Erfindung erzielten Vorteile bestehen insbesondere darin, daß eine flache Bauweise gegeben ist, durch wenig gekrümmt verlaufende Durchgänge sich ein geringer Durchflußwiderstand ergibt und der Kugelhahn gut (molchbar) zu reinigen ist. Letzteres ist für die farben-und lackverarbeitende Industrie (Automobilfabriken) von besonderer Bedeutung. Im Gegensatz zu bekannten Kugelhähnen gibt es keine Blindverschraubungen und es gilt, an nur wenigen Stellen Dichtungen vorzusehen. Der neue Kugelhahn ist sowohl für den Einsatz in einem Leitungssystem als auch - bei hydraulischen Aggregaten -für den sogenannten Platten-Aufbau geeignet.

Ein Ausführungsbeispiel der Erfindung ist in den Zeichnungen dargestellt und wird im folgenden näher beschrieben.

Es zeigt

Fig. 1 die Seitenansicht des neuen Kugelhahns im Schnitt A-B von Fig. 2,

Fig. 2 die Draufsicht auf einen Kugelhahn nach Fig. 1 und

Fig. 3 einen erfindungsgemäßen Kugelhahn für die Verwendung im Platten-Aufbau.

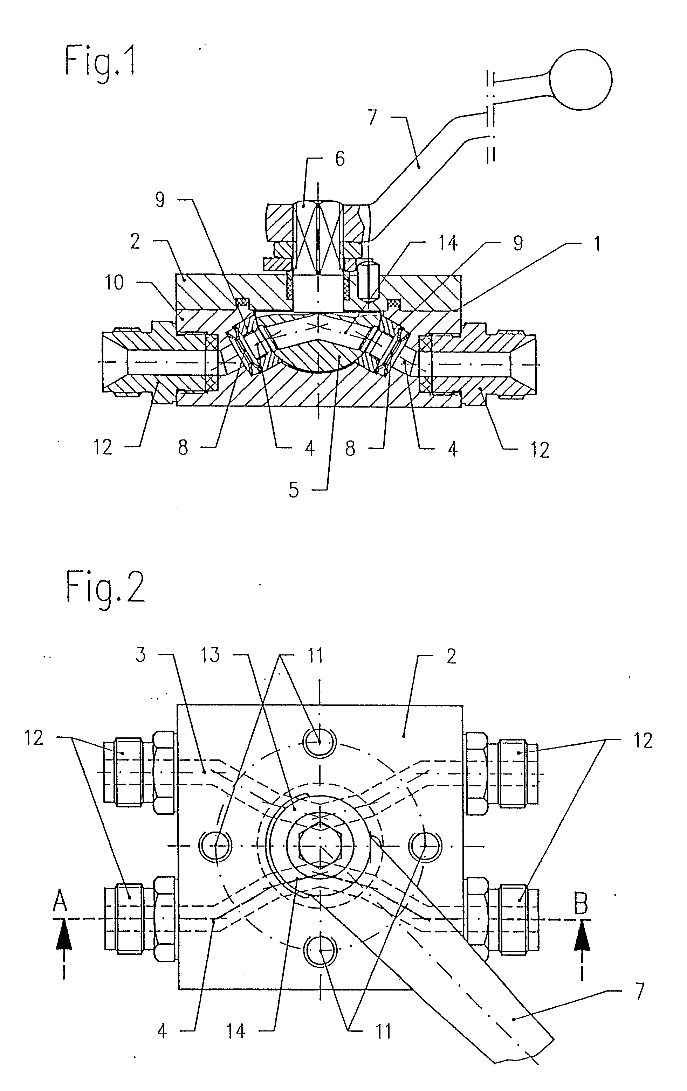

Wie aus den Fig. 1 und 2 ersichtlich ist, ist ein Gehäuse 1 vorhanden, daß lediglich aus einem Unterteil 10 besteht, auf dem mit Hilfe von Schrauben 11 ein Deckel 2 befestigt ist. In dem Unterteil 10 sind zwei wenig gekrümmt verlaufende, absperrbare Durchgänge 3, 4 vorhanden. Verschraubungen 12 dienen dazu, an die Durchgänge 3 bzw. 4 Leitungen anzuschließen. In dem Unterteil 10 ist ein Küken 5 drehbar gelagert. Das Küken 5 weist den Durchgängen 3 und 4 zugeordnete Bohrungen 13 und 14 auf. Mit Hilfe eines Vierkants 6 und eines darauf befestigen Hahnschlüssels 7 kann durch Drehen des Kükens 5 um 45 Grad der Hahn geschlossen werden, d.h. die Durchgänge 3 und 4 sind dann abgesperrt, weil die Bohrungen 13 und 14 in dem Küken 5 nicht mehr mit den Durchgängen 3 und 4 korrespondieren.

Der Übergang von den Durchgängen 3 und 4 zu dem Küken 5 bzw. zu den in ihm angeordneten Bohrungen 13 und 14 muß abgedichtet werden. Vorzugsweise kann das so ausgeführt sein, daß Dichtringe 9 vorgesehen sind, die mit Hilfe von Tellerfedern - oder durch Federn anderer Art - 8 gegen das Küken 5 gedrückt werden. Wesentlich bei der erfindungsgemäßen Ausführung ist, daß beim Zusammenbau von Unterteil 10 und Deckel 2 mit Hilfe des letzteren die Dichtringe 9 vorgespannt werden.

Wie aus Fig. 1 und 2 zu ersehen ist, haben die Durchgänge 3 und 4 bzw. die ihnen zugeordneten Bohrungen 13 und 14 in dem Küken 5 einen wenig gekrümmten Verlauf.

Durch diese erfindungsgemäße Ausbildung ist es möglich, einfach und bequem den Kugelhahn zu reinigen und, was besonders wichtig ist, er ist während des Reinigungsprozesses molchbar.

Die sich durch die Erfindung ergebende flache Konstruktion mit sehr wenigen Dichtstellen kommt vorzugsweise der Anwendung in farben- oder lackeverarbeitenden Betrieben zur Geltung.

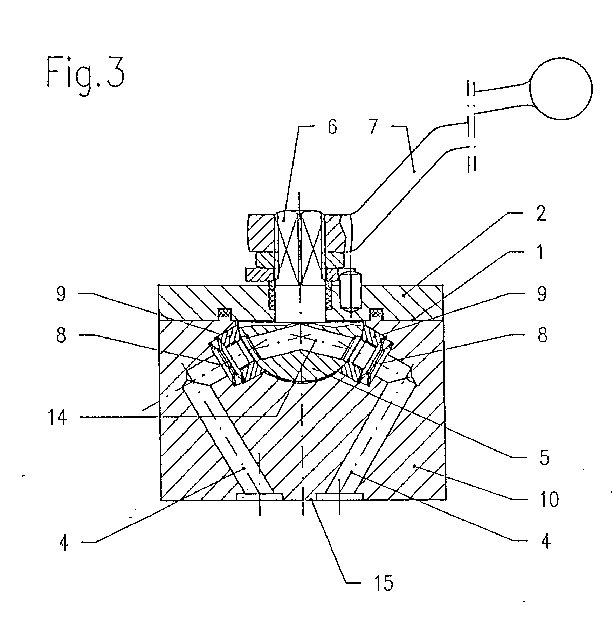

Wie aus Fig. 3 ersichtlich, ist der flache Aufbau eines Kugelhahns gemäß der Erfindung, der ohne Blindverschraubungen auskommt, auch für den Platten-Aufbau bei Hydraulik-Aggregaten geeignet. In diesem Fall sind die Durchgänge 3 und 4 zum Boden 15 des Unterteils 10 geführt. Der Boden 15 wird beispielsweise mit einem (nicht dargestellten) Hydraulik-Aggregat verschraubt, das den Durchgängen 3, 4 zugeordnete Bohrungen aufweist.

**Ansprüche**

1. Kugelhahn mit einem in einem Gehäuse geführten Küken, wobei das Gehäuse als Unterteil mit einem Deckel zur Führung der Betätigungsorgane für ein drehbar gelagertes Küken ausgebidet ist, dadurch **gekennzeichnet**, daß in dem Unterteil (10) zwei gegenüberliegend verlaufende, absperrbare Durchgänge (3, 4) vorhanden sind, denen im Küken (5) Bohrungen (13, 14) zugeordnet sind und daß der Deckel (2) unter Vorspannung der Dichtungen zwischen Küken (5) und den Durchgängen (3, 4) das Unterteil (10) mit dem Küken (5) dicht verschließt.

2. Kugelhahn nach Anspruch 1, dadurch **gekennzeichnet**, daß als Dichtungen zischen dem Küken (5) und den Durchgängen (3, 4) mit Tellerfedern (8) belastete Dichtringe (9) vorgesehen sind.

3. Kugelhahn nach Anspruch 1 oder 2, dadurch **gekennzeichnet**, daß die Durchgänge (3, 4) am Boden (15) des Unterteils (10) endend ausgebildet sind.

EP 0 399 095 A2

Fig.1

Fig.2

Fig.3